# EUROPÄISCHE PATENTSCHRIFT

(11) **EP 0 543 131 B1**
(45) Veröffentlichungstag und Bekanntmachung des Hinweises auf die Patenterteilung: **05.03.1997**
(21) Anmeldenummer: 92117241.7
(22) Anmeldetag: 09.10.1992
(51) Int. Cl.: H04N 5/265

(54) **Einrichtung zur Erzeugung von Bildeffekten in Videogeräten**
Device for generating special effects in video apparatus
Dispositif pour générer des effets spéciaux dans des appareils vidéo

(30) Priorität: 18.11.1991 DE 4137906
(43) Veröffentlichungstag der Anmeldung: 26.05.1993
(73) Patentinhaber: Grundig E.M.V. Elektro-Mechanische Versuchsanstalt Max Grundig GmbH & Co. KG, 90762 Fürth (DE)
(72) Erfinder: Richter, Manfred, Dipl.-Ing. (FH), GRUNDIG E.M.V., Kurgartenstrasse 37, W-8510 Fürth/Bay (DE)

(56) Entgegenhaltungen:
- DE-A- 3 619 799
- DE-A- 3 920 456
- US-A- 3 737 564
- US-A- 5 027 212

## Beschreibung

Die Erfindung betrifft eine Einrichtung zur Erzeugung von Bildeffekten in Videogeräten.

Die hobbymäßige Nutzung von Videokameras und Videorekordern erfreut sich einer immer stärkeren Verbreitung. Bei der Verwendung eines Videosystems, bestehend aus Videokamera und Videorekorder, zur Erstellung privater Aufnahmen ist die Nachbearbeitung der Aufnahmen mittels des Videorekorders für den Benutzer von besonderer Wichtigkeit. Dadurch wird es möglich, zusammenhängende Filme zu erstellen, so wie dies aus dem professionellen Bereich bekannt ist. Dazu ist eine elektronische Schnitteinrichtung vorzusehen, um die Aufnahmen der Videokamera in beliebiger Weise und ohne Pause aneinander reihen zu können. Außerdem ist eine Einrichtung zur Erzeugung von Bildeffekten wünschenswert, um beispielsweise Ein- und Ausblendungen erzeugen zu können. Damit lassen sich Titel einblenden. Ferner ist eine Umblendung von einer Szene auf eine andere sowie das Überblenden mit einer Maske möglich.

Eine derartige Einrichtung ist beispielsweise aus der deutschen Offenlegungsschriften DE 39 20 456 A bekannt. Mit dieser Einrichtung ist es möglich, ein Videosignal mit voreinstellbaren farbigen oder grauen Flächen zu überblenden. Dazu wird mittels eines Komparators das Leuchtdichtesignal des Videosignals mit einem vorgegebenen Grauwert verglichen und ein Multiplexer, der vom Komparator angesteuert wird, schaltet abhängig vom Ergebnis des Vergleichs entweder das Videosignal oder den Grauwert durch. Der Grauwert kann fest eingestellt sein oder durch einen Zähler verändert werden, so daß sich unterschiedliche Schattierungen und Überblendeffekte für das Videosignal ergeben. Durch Verwendung einer zweiten derartigen Einrichtung und einer Addierschaltung ist es möglich, zwei Videosignale zu überblenden. Um einen weichen Übergang von dem einen Videosignal zu dem anderen zu erreichen, werden die Vergleichsgrauwerte durch die Zähler der beiden Einrichtungen in gegenläufiger Weise festgelegt, d.h. der eine Zähler läuft vom Minimal- zum Maximalwert, während der andere vom Maximal- zum Minimalwert läuft. Das eine Bild wird somit dunkler, das andere heller. Werden diese beiden Videosignale mit der Addierschaltung zusammengefaßt, ergibt sich der Übergang von einem Videosignal zum anderen.

Die bekannte Einrichtung weist den Nachteil auf, daß zur Überblendung zweier Videosignale ein schaltungstechnisch großer Aufwand getrieben werden muß, und daß die beiden zu überblendenden Videosignale synchron vorliegen müssen, d.h. die Horizontal- und Vertikalsynchronimpulse müssen übereinstimmen.

Desweiteren sind nur Helligkeitsänderungen bzw. Überblendungen durch Begrenzung der Videosignale erzielbar.

Zur Synchronisierung zweier unsynchronisierter Videosignale ist aus der Patentschrift US-A-4,018,990 eine digitale Synchronisiereinrichtung bekannt. Die bekannte Synchronisiereinrichtung weist einen Bildspeicher auf, in den das erste Videosignal, gesteuert durch seine eigenen Synchronimpulse, eingeschrieben wird, um mit den Synchronimpulsen des zweiten Videosignals ausgelesen zu werden. Dadurch ist das erste Videosignal nach dem Bildspeicher synchron zum zweiten.

Außerdem ist aus der Patentschrift US-A-5,027,212 ein Video/Graphik-Anzeigesystem bekannt, bei dem mittels Bildspeichern mehrere Video- oder Graphiksignale synchronisiert werden können, wozu allerdings zwei Synchronisiereinrichtungen benötigt werden. Die synchronisierten Signale können dann pixelweise gemischt werden.

Aufgabe der vorliegenden Erfindung ist es deshalb, eine Einrichtung zur Erzeugung von Bildeffekten in Videogeräten anzugeben, die es mit geringem schaltungstechnischen Aufwand erlaubt, echte Überblendungen zweier Videosignale vorzunehmen, d. h. das Ersetzen von Bildteilen des einen Videosignals durch Bildteile des anderen Videosignals soll möglich sein.

Diese Aufgabe wird durch die im Anspruch 1 beanspruchte Erfindung gelöst.

Bei der Erfindung wird der bei Videogeräten mit digitaler Signalverarbeitung vorhandene Bildspeicher ausgenutzt. In den Bildspeicher wird ein erstes Videosignal gesteuert durch seine Horizontal- und Vertikalsynchronimpulse eingeschrieben. Dieses erste Videosignal dient als Maskensignal und sein Leuchtdichtesignal wird bei einer bevorzugten Ausführungsform mit einem vorgegebenen Schwellwert verglichen. Abhängig vom Vergleichsergebnis wird von einem Schalter entweder ein zweites Videosignal zur weiteren Verarbeitung durchgeschaltet oder das erste Videosignal, das mit den Horizontal- und Vertikalsynchronimpulsen des zweiten Videosignals aus dem Bildspeicher ausgelesen wurde.

Dadurch wird die Überblendung des zweiten Videosignals mit der Maske (erstes Videosignal) erreicht.

Im folgenden wird eine erfindungsmäßige Einrichtung, wie sie als Bestandteil eines Videogeräts vorgesehen werden kann, anhand von zwei Figuren beschrieben und näher erläutert.

Es zeigt:
Figur 1 ein Blockschaltbild einer erfindungsgemäßen Einrichtung, und
Figur 2 den Signalverlauf von zwei zu mischenden Videosignalen sowie das von der erfindungsgemäßen Einrichtung erzeugte Mischsignal.

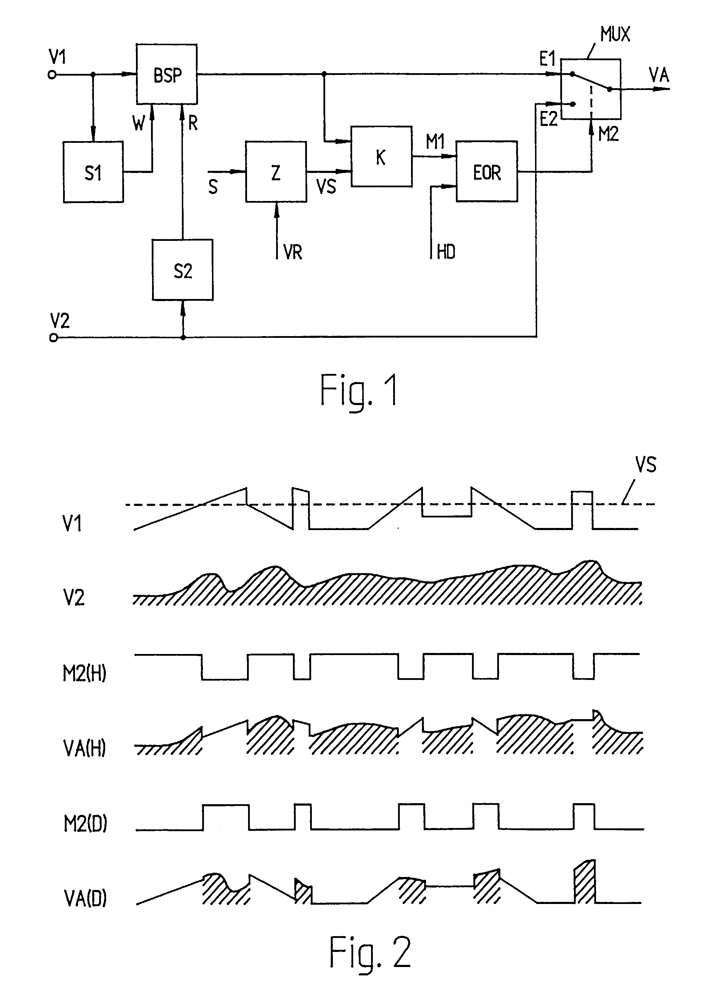

Das in der Figur 1 dargestellte Blockschaltbild einer erfindungsgemäßen Einrichtung weist einen Bildspeicher BSP, Mittel S1 und S2 zur Abtrennung von Horizontal- und Vertikalsynchronimpulsen von den Videosignalen V1 und V2, eine Zählerschaltung Z mit Setzeingang S und Zählrichtungsumschaltung VR, einen Komparator K, einen EXOR-Logikbaustein EOR sowie einen Umschalter MUX auf.

Von dem ersten Videosignal V1 werden mittels der Abtrenneinheit S1 die Horizontal- und Vertikalsynchronimpulse abgetrennt, um damit das Einschreiben des ersten Videosignals V1 in den Bildspeicher BSP über den Steuereingang W des Bildspeichers BSP zu steuern. Die zweite Abtrenneinheit S2 trennt die Horizontal- und Vertikalsynchronimpulse vom zweiten Videosignal V2 ab. Mit den von der Abtrenneinheit S2 zur Verfügung gestellten Impulsen wird das Auslesen des Bildspeichers BSP über den Steuereingang R gesteuert. Dadurch ist sichergestellt, daß die Synchronimpulse der beiden Videosignale V1 und V2 übereinstimmen, so daß es bei der späteren Mischung der beiden Videosignale zu keinen Störungen kommen kann. Es ist sogar möglich, ein Videosignal V1 zu verarbeiten, das nicht der Norm des verwendeten Fernsehstandards entspricht. Arbeitet das Videogerät beispielsweise mit einem PAL-Normsignal mit 625-Zeilen, 50 Hz Bildwechselfrequenz und Interlace-Mode, so kann das Videosignal V1 ein PAL-Signal mit anderer Zeilenzahl und/oder Bildwechselfrequenz und/oder Progressive-Mode sein, solange das Videosignal V2 der im Videogerät verwendeten PAL-Norm entspricht.

Die Mischung der nun synchronisierten Videosignale V1 und V2 wird von einem Umschalter oder Multiplexer MUX vorgenommen. Zur Ansteuerung dieses Multiplexers MUX wird ein Steuersignal M2 erzeugt. Dazu wird in einem Komparator K beispielsweise das Leuchtdichtesignal des Videosignals V1, welches als Maske verwendet wird, mit einem vorgebbaren Wert VS verglichen. Der Vergleichswert VS wird über einen Setzeingang S am Zähler Z eingestellt und kann konstant gehalten werden oder von dem Zähler Z, dessen Zählrichtung über den Eingang VR umgeschaltet werden kann, innerhalb des für das Leuchtdichtesignal zulässigen Bereichs verändert werden. Ist der Vergleichswert VS kleiner als der Wert des Leuchtdichtesignals von V1, so schaltet der Multiplexer MUX das Videosignal V1 durch, im anderen Fall das Videosignal V2. Um das Umschaltverhalten des Multiplexers MUX umzukehren ist ein EXOR-Logikbaustein EOR vorhanden. Durch Anlegen eines "High"-Signals an den Eingang HD des Logikbausteins EOR kann das vom Komparator K stammende Umschaltsignal M1 invertiert werden, so daß das Videosignal V2 durchgeschaltet wird, falls der Vergleichswert VS kleiner als der Wert des Leuchtdichtesignals von V1 ist.

In Figur 2 sind ein erstes Videosignal V1, das als Maske verwendet wird, sowie ein zweites Videosignal V2 dargestellt. Im ersten Videosignal V1 ist, als gestrichelte Linie gezeichnet, außerdem der Vergleichswert VS angedeutet. Liegt am Eingang HD des Logikbausteins EOR ein "Low"-Signal an, so ergibt sich für das Umschaltsignal M2 der dargestellte Verlauf M2(H). Für hohe Pegel des Umschaltsignals M2 schaltet der Multiplexer MUX das ebenfalls dargestellte Videosignal V2 durch, für niedrige Pegel das Videosignal V1. Am Ausgang VA des Multiplexers ergibt sich der Signalverlauf VA(H), d.h. die Bildteile des Videosignals V1, die größer - also heller - als der Vergleichswert VS sind, werden in das Bild des Videosignals V2 eingestanzt. Wird an den Eingang HD des Logikbausteins EOR ein "High"-Signal angelegt, so ergibt sich für das Umschaltsignal M2 der Signalverlauf M2(D), der invers zum oben beschriebenen Signalverlauf M2(H) ist. Das Ergebnis der Mischung der Videosignale V1 und V2 stellt der Signalverlauf VA(D) dar. In diesem Fall werden alle Bildteile der Maske, d.h. des Videosignals V1, die kleiner - also dunkler - als der Vergleichswert VS sind, in das Bild des Videosignals V2 eingestanzt.

Anstatt des Leuchtdichtesignals kann zur Gewinnung des Umschaltsignals M2 auch eines der Farbartsignale des Videosignals V1 verwendet werden.

Für die im obigen Ausführungsbeispiel beschriebene Bildverarbeitung ist es notwendig, daß das Videosignal V1 in digitaler Form vorliegt. Bei der Verwendung eines Bildspeichers im Signalweg des Videosignals V1 ist dies gegeben. Die Erzeugung des Umschaltsignals M2 kann also wie beschrieben erfolgen. Um das digitale Videosignal V1 mit dem Videosignal V2 mischen zu können, muß das Videosignal V2 in digitaler Form vorliegen. In diesem Fall wird das gemischte Videosignal VA zur Darstellung in ein analoges Signal zurückgewandelt. Alternativ kann das Videosignal V1 vor der Mischung mit dem zweiten Videosignal V2 in ein analoges Signal zurückgewandelt werden. Wird die Einrichtung in der zuletzt beschriebenen Weise aufgebaut, kann auf die Analog-Digital-Wandlung des Videosignals V2 verzichtet werden.

In einer anderen Ausführungsform ist es auch möglich, das Umschaltsignal M2 aus in analoger Form vorliegenden Videosignalen V1 und V2 zu erzeugen. Anstatt des digitalen Komparators K wird ein analoger Komparator verwendet, der das Steuersignal M1 abhängig vom analogen Videosignal V1 und dem analogen Vergleichswert VS, der einstellbar oder von einem Rampengenerator veränderbar ist, ableitet. Mittels des EXOR-Logikbausteins EOR wird aus dem Steuersignal M1 das Umschaltsignal M2 erzeugt.

Die so erzeugten Bildeffekte ähneln dem "Blue-Box"-Verfahren, da über den Vergleichswert VS festlegbare Bildteile eines Videosignals in ein anderes Videosignal eingeblendet werden können.

Zusätzliche Effekte für das Videosignal, welches als Maske dient, ergeben sich aus der Tatsache, daß ein bereits vorhandener Bildspeicher verwendet wird. Dadurch wird es z.B. möglich sogenannte "Freeze"-Effekte zu erzielen, bei denen das Maskenbild festgehalten und somit "eingefroren" wird. Weiterhin ist es möglich, das Maskensignal zu invertieren, beliebig einzufärben usw.

Ebenfalls möglich ist die Aus- bzw. Überblendung eines Videosignals mit einem anderen, wenn der Vergleichswert VS durch den Zähler verändert wird. Die Veränderung des Vergleichswertes VS durch den Zähler, vom Minimal- zum Maximalwert oder umgekehrt, erfolgt sinnvollerweise immer am Anfang einer neuen Bildzeile oder am Anfang eines neuen Bildes. Dazu können die von der Abtrenneinheit S2 zur Verfügung gestellten Impulse verwendet werden, um synchron zu diesen Zeitpunkten veränderte Vergleichswerte VS an den Komparatoreingang zu legen. Außerdem kann die Bedienperson die Zählergeschwindigkeit regeln, so daß die Zeitdauer des Überblendvorgangs gesteuert werden kann.

Durch geringe Erweiterungen des in Figur 1 dargestellten Blockschaltbildes der beschriebenen Einrichtung kann diese auch für die Verarbeitung eines einzigen Videosignals eingesetzt werden. Dazu ist lediglich ein Schalter vorzusehen, der bei Betrieb mit nur einer Videosignalquelle die Eingänge V1 und V2 verbindet. Dann kann beispielsweise eine "eingefrorene" Maske, wie oben beschrieben, verwendet werden. Wird ein weiterer Umschalter vorgesehen, der am Eingang E1 des Multiplexers M vom Videosignal V1 auf einen konstanten Grau- oder Farbwert umschaltet, so können Bildteile, die ober- oder unterhalb des Vergleichswerts VS liegen, mit Grau- oder Farbflächen eingefärbt werden, abhängig vom Steuersignal HD am Logikbaustein EOR. Für die Mischung eines einzigen Videosignals mit Grau- oder Farbflächen ist der Bildspeicher BSP nicht nötig.

## Patentansprüche

1. Einrichtung zur Erzeugung von Bildeffekten in Videogeräten mit einer ersten Synchronimpulsabtrennschaltung (51), die Horizontal- und Vertikalsynchronimpulse eines ersten Videosignals (V1) abtrennt, einem Bildspeicher (BSP), in den das erste Videosignal (V1), gesteuert durch die abgetrennten Synchronimpulse (W), geschrieben wird, einer zweiten Synchronimpulsabtrennschaltung (S2), die Horizontal- und Vertikalsynchronimpulse (R) eines zweiten Videosignals (V2) abtrennt, zur Steuerung des Auslesens des ersten Videosignals (V1) aus dem Bildspeicher (BSP), das zusammen mit dem zweiten Videosignal (V2) an einer Umschalteinrichtung (MUX) anliegt (E1;E2), die von einer Steuereinrichtung (Z;K;EOR) mittels eines Umschaltsignals (M2) gesteuert wird,
**dadurch gekennzeichnet,**
daß nach Maßgabe des Steuersignals (M2) entweder nur das erste Videosignal (V1) oder nur das zweite Videosignal (V2) an den Ausgang (VA) der Umschalteinrichtung (MUX) gelangt, wodurch Bildteile des ersten Videosignals (V1) Bildteile des zweiten Videosignals (V2), oder umgekehrt, ersetzen und die Steuereinrichtung (Z;K;EOR) das Umschaltsignal (M2) aus dem ersten Videosignal (V1) ableitet.

2. Einrichtung nach Anspruch 1,
**dadurch gekennzeichnet,**
daß die Steuereinrichtung (Z;K;EOR) umfaßt:
einen einschaltbaren Zähler (Z) mit einstellbarem Anfangswert (S) und einstellbarer Zählrichtung (VR), einen Komparator (K), der den vom Zähler (Z) gelieferten digitalen Vergleichswert (VS) mit einer Videosignalinformation des digitalen ersten Videosignals (V1) vergleicht und ein erstes Steuersignal (M1) ableitet, sowie
einen EXOR-Logikbaustein (EOR), der das zweite Steuersignal (M2) für die Umschalteinrichtung (MUX) aus dem ersten Steuersignal (M1) erzeugt.

3. Einrichtung nach Anspruch 1,
**dadurch gekennzeichnet**,
daß die Steuereinrichtung (Z;K;EOR) umfaßt:
einen einschaltbaren Rampengenerator (Z) mit einstellbarem Anfangswert (S) und einstellbarer Laufrichtung (VR),
einen Komparator (K), der den vom Rampengenerator (Z) gelieferten analogen Vergleichswert (VS) mit einer Videosignalinformation des analogen ersten Videosignals (V1) vergleicht und ein erstes Steuersignal (M1) ableitet, sowie
einen EXOR-Logikbaustein (EOR), der das zweite Steuersignal (M2) für die Umschalteinrichtung (MUX) aus dem ersten Steuersignal (M1) erzeugt.

4. Einrichtung nach einem der Ansprüche 1 bis 3,
**dadurch gekennzeichnet,**
daß die Steuereinrichtung (Z;K;EOR) das erste Umschaltsignal (M1) aus der Leuchtdichteinformation oder der Farbartinformation des ersten Videosignals (V1) ableitet.

5. Einrichtung nach einem der Ansprüche 1, 2 und 4,
**dadurch gekennzeichnet**,
daß an der Umschalteinrichtung (MUX) Videosignale (E1;E2) in digitaler Form anliegen.

6. Einrichtung nach einem der Ansprüche 1 bis 4,
**dadurch gekennzeichnet,**
daß an der Umschalteinrichtung (MUX) Videosignale (E1;E2) in analoger Form anliegen.

7. Einrichtung nach einem der Ansprüche 1 bis 6,
**dadurch gekennzeichnet,**
daß ein Schalter die beiden Videoeingänge (V1;V2) verbindet, um die Verarbeitung eines einzelnen Videosignals zu ermöglichen.

8. Einrichtung nach einem der Ansprüche 1 bis 7,
**dadurch gekennzeichnet**,
daß am Eingang (E1) der Umschalteinrichtung (MUX) ein Umschalter vorgesehen ist, der von dem ersten Videosignal (V1) auf ein Grau- oder Farbsignal umschaltet.

## Claims

1. Device for generating video effects in video recorders, having a first synchronizing pulse separation circuit (51), which separates the horizontal and vertical synchronizing pulses of a first video signal (V1), a matrix memory (BSP), into which the first video signal, controlled by the separated synchronizing pulse (W), is written, a second synchronizing pulse separation circuit (S2), which separates the horizontal and vertical synchronizing pulses (R) of a second video signal (V2), to control the reading out of the first video signal (V1) from the matrix memory (BSP), which together with the second video signal (V2), is applied to a switching device (MUX) (E1; E2), which is controlled by a control device (Z; K; EOR) by means of a switching signal (M2), **characterised in that** in accordance with the control signal (M2) either the first video signal (V1) only, or the second video signal (V2) only passes to the output (VA) of the switching device (MUX), by which portions of the first video signal (V1) replace portions of the second video signal (V2), and vice versa, and the control device (Z; K; EOR) derives the switching signal (M2) from the first video signal (V1).

2. Device according to Claim 1, **characterised in that** the control device (Z; K; EOR) comprises a triggered counter (Z) with adjustable initial value (S) and adjustable counting direction (VR), a comparator (K), which compares the digital reference value (VS) supplied by the counter (Z) to video signal data from the first digital video signal (V1) and derives a first control signal (M1), as well as an EXOR logic device (EOR), which generates the second control signal (M2) for the switching device (MUX) from the first control signal (M1).

3. Device according to Claim 1, **characterised in that** the control device (Z; K; EOR) comprises a triggered ramp generator (Z) with adjustable initial value (S) and adjustable direction (VR), a comparator (K), which compares the analogue reference value (VS) supplied by the ramp generator (Z) to video signal data from the first analogue video signal (V1) and derives a first control signal (M1), as well as an EXOR logic device (EOR), which generates the second control signal (M2) for the switching device (MUX) from the first control signal (M1).

4. Device according to one of Claims 1 to 3, **characterised in that** the control device (Z; K; EOR) derives the first switching signal (M1) from the luminance information or the chrominance information of the first video signal (V1).

5. Device according to one of Claims 1, 2 and 4 , **characterised in that** video signals (E1; E2) are applied to the switching device (MUX) in digital form.

6. Device according to one of Claims 1, to 4 , **characterised** in that video signals (E1; E2) are applied to the switching device (MUX) in analogue form.

7. Device according to one of Claims 1, to 6 , **characterised in that** a switch connects the two video inputs (V1; V2) to enable a single video signal to be processed.

8. Device according to one of Claims 1, to 7, **characterised in that** a changeover switch which switches over from the first video signal (V1) to a grey signal or colour signal, is provided at the input (E1) of the switching device (MUX).

## Revendications

1. Dispositif pour produire des effets spéciaux dans des appareils vidéo, comportant
un premier circuit (51) de séparation des impulsions de synchronisation, qui sépare les impulsions de synchronisation horizontale et verticale d'un premier signal vidéo (V1), une mémoire d'images (BSP), dans laquelle le premier signal vidéo (V1) est écrit d'une manière commandée par les impulsions de synchronisation séparées (W),
un second circuit (S2) de séparation des impulsions de synchronisation, qui sépare les impulsions de synchronisation horizontale et verticale (R) d'un second signal vidéo (V2), pour la commande de la lecture, dans la mémoire d'images (BSP), du premier signal vidéo (V1) qui est appliqué (E1; E2) conjointement avec le second signal vidéo (V2), à un dispositif de commutation (MUX), qui est commandé par un dispositif de commande (Z; K; EOR) au moyen d'un signal de commutation (M2), caractérisé en ce que,
en fonction du signal de commande (M2), seul le premier signal vidéo (V1) ou seul le second signal vidéo (V2) parvient à la sortie (VA) du dispositif de commutation (MUX), des parties d'image du premier signal vidéo (V1) remplaçant des parties d'image du second signal vidéo (V2) ou inversement, et le dispositif de commande (Z; K; EOR) dérivant le signal de commutation (M2) à partir du premier signal vidéo (V1).

2. Dispositif selon la revendication 1, caractérisé en ce que le dispositif de commande (Z; K; EOR) comprend:
un compteur pouvant être activé (Z), possédant une valeur de départ réglable (S) et un sens de comptage réglable (VR),
un comparateur (K), qui compare la valeur de comparaison numérique (VS) délivrée par le compteur (Z) à une information du premier signal vidéo numérique (V1) et dérive du signal de commande (M1), ainsi que
un module logique OU-EXCLUSIF (EOR), qui produit le second signal de commande (M2) pour le dispositif de commutation (MUX) à partir du premier signal de commande (M1).

3. Dispositif selon la revendication 1, caractérisé en ce que le dispositif de commande (Z; K; EOR) comprend:
un premier générateur (Z) de signaux en rampe, pouvant être activé et possédant une valeur de départ réglable (S) et un sens de circulation réglable (VR),
un comparateur (K), qui compare la valeur de comparaison analogique (VS) délivrée par le générateur de signaux en rampe (Z) à une information du premier signal de vidéo analogique (V1) et dérive un premier signal de commande (M1), ainsi que
un module logique OU-EXCLUSIF (EOR), qui produit le second signal de commande (M2) pour le dispositif de commutation (MUX) à partir du premier signal de commande (M1).

4. Dispositif selon l'une des revendications 1 à 3, caractérisé en ce que le dispositif de commande (Z; K; EOR) dérive du premier signal de commutation (M1) à partir de l'information de luminance ou de l'information de type de couleur du premier signal vidéo (V1).

5. Dispositif selon l'une des revendications 1, 2 et 4, caractérisé en ce que les signaux vidéo (E1; E2) sont appliqués, sous forme numérique, au dispositif de commutation (MUX).

6. Dispositif selon l'une des revendications 1 à 4, caractérisé en ce que des signaux vidéo (E1; E2) sont appliqués sous forme analogique, au dispositif de commutation (MUX).

7. Dispositif selon l'une des revendications 1 à 6, caractérisé en ce qu'un interrupteur relie les deux entrées vidéo (V1; V2), de manière à permettre le traitement d'un signal vidéo individuel.

8. Dispositif selon l'une des revendications 1 à 7, caractérisé en ce qu'à l'entrée (E1) du dispositif de commutation (MUX) est prévu un commutateur qui exécute une commutation du premier signal vidéo (V1) sur un signal de gris ou de couleur.
